# EUROPEAN PATENT APPLICATION

(11) **EP 4 667 873 A1**
(43) Date of publication of application: **24.12.2025**
(21) Application number: 23922589.9
(22) Date of filing: 13.02.2023
(51) Int. Cl.: G01C 21/26

(54) **INFORMATION PROCESSING DEVICE, INFORMATION PROCESSING METHOD, AND INFORMATION PROCESSING PROGRAM**

(71) Applicant: Pioneer Corporation, Tokyo 113-0021 (JP)
(72) Inventor: NAKAMOTO, Shogo, Tokyo 113-0021 (JP); OGAWA, Keisuke, Tokyo 113-0021 (JP); MATSUMOTO, Reiji, Kawagoe-shi, Saitama 350-8555 (JP); FUKUSHIMA, Norihiko, Kawagoe-shi, Saitama 350-8555 (JP); HIJIKATA, Makoto, Tokyo 113-0021 (JP)
(74) Representative: Hoffmann Eitle
(86) International application number: PCT/JP2023/004762
(87) International publication number: WO 2024/171248

(57) **Abstract**

An information processing apparatus according to the present disclosure includes: a first specifying unit that specifies an activity range of a user on the basis of a movement history of the user; a second specifying unit that specifies a reachable range on the basis of energy consumption in a mobile body selected by the user, the reachable range being a range reachable in the mobile body from a base of the user within the activity range; and a generation unit that generates evaluation information capable of evaluating movement in the activity range in the mobile body on the basis of the activity range and the reachable range.

## Description

### Field

The present disclosure relates to an information processing apparatus, an information processing method, and an information processing program.

### Background

Conventionally, there has been proposed a method of acquiring a travelable range of a mobile body according to a power storage amount input by a user and displaying information on the acquired travelable range.

### Citation List

### Patent Literature

Patent Literature 1: JP 2016-80602 A

### Summary

### Technical Problem

However, in the above-described conventional technique, it is not always possible to appropriately evaluate whether or not it is possible to switch to the mobile body selected by the user.

For example, in the above-described conventional technique, a range in which the mobile body currently used by the user can move from the current position is acquired on the basis of the power storage amount, and the acquired movable range is merely displayed. For this reason, in the above-described conventional technique, for example, it is not easy to determine whether or not there is no inconvenience in daily movement with a mobile body to which the user is considering switching (with which the user is considering replacing).

The present disclosure has been made in view of the above, and proposes an information processing apparatus, an information processing method, and an information processing program capable of appropriately evaluating whether or not it is possible to switch to a mobile body selected by a user.

### Solution to Problem

An information processing apparatus comprising:
a first specifying unit that specifies an activity range of a user on a basis of a movement history of the user; a second specifying unit that specifies a reachable range on a basis of energy consumption in a mobile body selected by the user, the reachable range being a range reachable in the mobile body from a base of the user within the activity range; and a generation unit that generates evaluation information capable of evaluating movement in the activity range in the mobile body on a basis of the activity range and the reachable range.

An information processing method executed by an information processing apparatus, the method comprising: a first specifying step of specifying an activity range of a user on a basis of a movement history of the user; a second specifying step of specifying a reachable range on a basis of energy consumption in a mobile body selected by the user, the reachable range being a range reachable in the mobile body from a base of the user within the activity range; and a generation step of generating evaluation information capable of evaluating movement in the activity range in the mobile body on a basis of the activity range and the reachable range.

An information processing program executed by an information processing apparatus, the program causing the information processing apparatus to execute: a first specifying procedure of specifying an activity range of a user on a basis of a movement history of the user; a second specifying procedure of specifying a reachable range on a basis of energy consumption in a mobile body selected by the user, the reachable range being a range reachable in the mobile body from a base of the user within the activity range; and a generation procedure of generating evaluation information capable of evaluating movement in the activity range in the mobile body on a basis of the activity range and the reachable range.

### Brief Description of Drawings

FIG. 1 is a diagram illustrating an example of a system according to an embodiment.
FIG. 2 is a diagram illustrating a configuration example of a server device according to the embodiment.
FIG. 3 is a flowchart illustrating a procedure of an activity range specifying method according to the embodiment.
FIG. 4 is a diagram illustrating a specific example of the activity range specifying method according to the embodiment.
FIG. 5 is a flowchart illustrating a procedure of a reachable range specifying method according to the embodiment.
FIG. 6 is a flowchart illustrating a procedure of an estimated power consumption calculation method according to the embodiment.
FIG. 7 is a flowchart illustrating a procedure of an evaluation information generation method according to the embodiment.
FIG. 8 is a diagram illustrating a specific example (1) of a dispersion degree calculation method according to the embodiment.
FIG. 9 is a diagram illustrating a specific example (2) of the dispersion degree calculation method according to the embodiment.
FIG. 10 is a diagram illustrating a modification of the reachable range specifying method according to the embodiment.
FIG. 11 is a hardware configuration diagram illustrating an example of a computer implementing functions of the server device.

### Description of Embodiments

### [Embodiment]

Hereinafter, an embodiment of the present disclosure will be described in detail with reference to the drawings. Note that an information processing apparatus, an information processing method, and an information processing program according to the present disclosure are not limited by the embodiment. In the following embodiment, the same parts are denoted by the same reference numerals, and redundant description will be omitted.

In the following embodiment, a "mobile body" will be described as a "vehicle" (automobile) that travels on a road. Accordingly, "movement" is expressed as "traveling". For example, the expression "a reachable range that is a range reachable in a mobile body" is replaced with "a reachable range that is a range reachable in a vehicle".

### [1. Introduction]

Until now, it has been difficult to appropriately evaluate whether or not it is possible to switch from a vehicle in which an energy source for driving a power source is gasoline stored in a storage tank, that is, a gasoline vehicle (GV) to a vehicle in which an energy source for driving a power source is electric power stored in a battery, that is, an electric vehicle (EV).

For example, concerns at the time of switching from a GV to an EV include a wide range of items such as charging time, a travel distance at full charge, locations and the number of charging facilities, and a service life of a battery. Therefore, in the evaluation of the reachability in one travel (one trip) for a specific route as a target, it is not always possible to appropriately evaluate whether or not the switching is possible.

The present disclosure proposes a new technique for solving the above problem. Specifically, in the proposed method according to the present disclosure, whether or not the user can travel without inconvenience in an activity range of the user is evaluated even if the user switches to the EV.

Specifically, the activity range of the user is compared with a reachable range that is a range reachable in the EV from the base of the user within the activity range, and the traveling possibility is evaluated on the basis of the comparison result. For example, in the proposed method according to the present disclosure, it is indicated that there is no problem in the operation of the EV even if the user switches to the EV on the basis of the use method of the user for a certain period, the surrounding environment such as a charging spot, and information on the EV selected by the user.

As a result, according to the proposed method according to the present disclosure, it is possible to appropriately evaluate whether or not it is possible to switch to the EV selected by the user.

### [2. System Configuration]

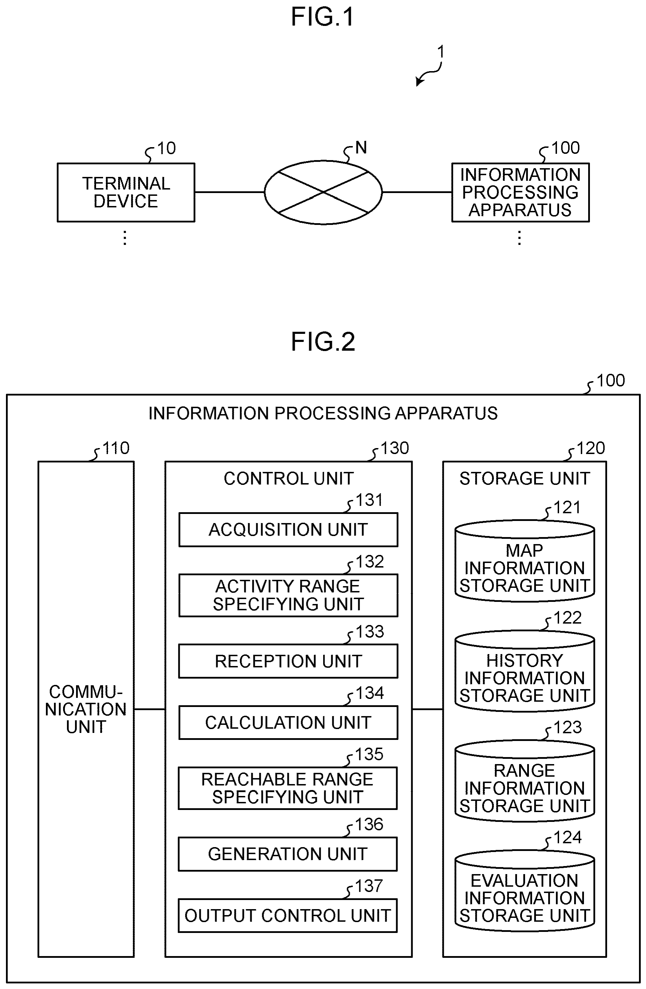

First, a configuration of a system according to the embodiment will be described with reference to FIG. 1.

FIG. 1 is a diagram illustrating an example of the system according to the embodiment. FIG. 1 illustrates a system 1 as an example of the system according to the embodiment. Information processing according to the embodiment of the present disclosure (hereinafter, abbreviated as "information processing according to the embodiment") may be realized in the system 1.

As illustrated in FIG. 1, the system 1 may include a terminal device 10 and a server device 100. Furthermore, the terminal device 10 and the server device 100 may be communicably connected to each other in a wired or wireless manner via a network N. Furthermore, the system 1 may include any number of the terminal devices 10 and any number of the server devices 100.

### [3. Overview of Each Device Included in System]

### (Server device 100)

The server device 100 is an example of an information processing apparatus according to the embodiment, and is a main device that performs the information processing according to the embodiment. Specifically, the server device 100 specifies the activity range of the user on the basis of the movement history of the user, and, on the basis of the energy consumption in an EV selected by the user, specifies the reachable range that is the range reachable in the EV from the base of the user within the activity range. Then, the server device 100 generates evaluation information capable of evaluating the movement in the activity range in the EV on the basis of the activity range and the reachable range, and causes the terminal device 10 to displays the evaluation information.

Note that, in the present embodiment, the user refers to a person who is considering switching, the person being considering switching to an EV. For example, the user may be a person who is currently using a GV and is considering switching to an EV, or may be a person who is considering switching from a currently-owned EV to another EV.

### (Terminal device 10)

The terminal device 10 may be an information processing terminal used by a person who is considering switching to an EV. Furthermore, the terminal device 10 may be an information processing terminal used by a sales person, for example, in a place where a proposal for switching to an EV is given to the person. For example, the terminal device 10 is a smartphone, a wearable device, a tablet terminal, a notebook personal computer (PC), a desktop PC, a mobile phone, a personal digital assistant (PDA), or the like.

As another example, the terminal device 10 may be a dedicated navigation device built in or loaded on a vehicle (hereinafter, the vehicle may be referred to as a "vehicle VE") currently used by the user, that is, an in-vehicle device. Such an in-vehicle device may include a navigation device and a recording device (drive recorder). As an example, the in-vehicle device may be a combined device in which a navigation device and a recording device independent from each other are communicably connected. As another example, the in-vehicle device may be one device having a navigation function and a recording function.

### [4. Functional Configuration]

Hereinafter, a configuration example of the server device 100 will be described with reference to FIG. 2. FIG. 2 is a diagram illustrating a configuration example of the server device 100 according to the embodiment. As illustrated in FIG. 2, the server device 100 includes a communication unit 110, a storage unit 120, and a control unit 130.

### (Communication unit 110)

The communication unit 110 is implemented by, for example, a network interface card (NIC) or the like. Then, the communication unit 110 is connected to a network N in a wired or wireless manner, and transmits and receives information to and from the terminal device 10, for example.

### (Storage unit 120)

The storage unit 120 is implemented by, for example, a semiconductor memory element such as a random access memory (RAM) or a flash memory, or a storage device such as a hard disk or an optical disk. The storage unit 120 may store, for example, data and programs regarding the information processing according to the embodiment. Furthermore, according to the example of FIG. 2, the storage unit 120 may include a map information storage unit 121, a history information storage unit 122, a range information storage unit 123, and an evaluation information storage unit 124.

### (Map information storage unit 121)

The map information storage unit 121 stores, for example, map data of the whole country. Such map data includes road data representing a road network by a combination of a link and a node.

The link means a section between feature points of a road. The node is a feature point of a road, and examples thereof include an intersection, a corner, a dead end, and the like. That is, the link means a road section set on the basis of a predetermined rule. In other words, the link means a unit obtained by dividing the recording section of a movement history on the basis of a predetermined rule. In the map data, the link may be identified by a link ID.

Furthermore, the map data may also include facility data, object information around roads, and the like. The object information includes information on a temporarily existing obstacle in addition to a signboard such as a road sign, a road marking such as a stop line, a road section line such as a center line, and a feature such as a structure along a road. The obstacle refers to, for example, a factor that hinders passage of a pedestrian or a bicycle, such as a puddle, a depressed portion of a road, a falling object, or a drainage ditch (including a portion covered by a net). The object information may include high-accuracy point cloud information on an object used for own vehicle position estimation or the like.

### (History information storage unit 122)

The history information storage unit 122 stores a movement history of the user. Such a movement history may also include a travel history in which the user has moved in the vehicle VE. Note that the server device 100 can acquire the movement history based on the position information detected by a GPS function of the terminal device 10 of the user. The history information storage unit 122 may store information on the movement history separately for each user.

### (Range information storage unit 123)

The range information storage unit 123 stores information indicating the activity range of the user and information indicating the reachable range that is the range reachable in the EV from the base of the user in the activity range. The range information storage unit 123 may store information indicating the activity range and information indicating the reachable range separately for each user.

### (Evaluation information storage unit 124)

The evaluation information storage unit 124 stores the evaluation information generated by a generation unit 136.

### (Control unit 130)

The control unit 130 is implemented by executing various programs (for example, an information processing program according to the embodiment) stored in a storage device inside the server device 100 using a RAM as a work area by a central processing unit (CPU), a micro processing unit (MPU), or the like. Furthermore, the control unit 130 is implemented by, for example, an integrated circuit such as an application specific integrated circuit (ASIC) or a field programmable gate array (FPGA).

### (Acquisition unit 131)

An acquisition unit 131 acquires information on the movement history of the user. For example, the acquisition unit 131 may acquire a change (movement trajectory) in the position information detected by the GPS function of the terminal device 10 of the user as the movement history.

Note that the movement history may be input by the user instead of being dynamically acquired by the acquisition unit 131 on the basis of the position information. That is, the acquisition unit 131 may acquire the movement history input by the user.

Furthermore, in addition to the movement history, the acquisition unit 131 may acquire various types of information necessary for the information processing according to the embodiment. For example, the acquisition unit 131 may acquire traffic congestion information, traffic congestion prediction data, link information (for example, the length of the link, the road type of the link, and the elevation data of the link), EV setting information, and the like.

### (Activity range specifying unit 132)

An activity range specifying unit 132 specifies the activity range of the user on the basis of the movement history of the user. The activity range of the user referred to herein may be, for example, a daily activity range of the user, and can be rephrased as a living area. Note that the activity range specifying unit 132 is a processing unit corresponding to a first specifying unit.

### (Reception unit 133)

A reception unit 133 receives, from the user, information on the EV to which the user is considering switching, that is, the EV to which the user is switching (abbreviated as "EV vehicle information"). The EV vehicle information may include various types of attribute information (brand name, weight, energy consumption efficiency, air resistance coefficient) on the EV to which the user is switching, a virtual power storage amount, and the like.

The virtual power storage amount is a charge amount when the battery is charged in a state before (at present) actual charging of the battery. For example, when the current power storage amount (power storage rate) is 30% and 50% is input as the virtual power storage amount, the battery is actually charged for 20% later.

Note that the reception unit 133 may receive input of information (for example, brand name) that can identify the EV to which the user is switching, and, on the basis of the information, may acquire various types of specification information such as weight, energy consumption efficiency, and air resistance coefficient from a predetermined database.

### (Calculation Unit 134)

A calculation unit 134 calculates an available power amount (power storage amount) on the basis of predetermined information. For example, when the input of the EV vehicle information is received, the calculation unit 134 calculates the available power amount on the basis of the virtual power storage amount included in the EV vehicle information.

Furthermore, the calculation unit 134 calculates the energy consumption in the link using a predetermined consumed energy calculation formula. For example, the calculation unit 134 calculates the required time required for the EV to finish traveling on the link on the basis of traffic congestion prediction data, the length of the link, a road type, and the like. Then, the calculation unit 134 calculates the estimated power consumption (an example of the energy consumption) in the link using the predetermined consumed energy calculation formula.

### (Reachable range specifying unit 135)

A reachable range specifying unit 135 specifies a reachable range that is a range reachable in the EV from the base of the user within the activity range on the basis of the energy consumption calculated by the calculation unit 134. That is, the reachable range specifying unit 135 specifies the reachable range on the basis of the estimated power consumption estimated to be consumed when the user travels on the link starting from the base of the user in the EV and the power storage amount of the battery of the EV. Note that the reachable range specifying unit 135 is a processing unit corresponding to a first specifying unit.

### (Generation unit 136)

The generation unit 136 generates evaluation information capable of evaluating the movement of the activity range in the EV on the basis of the activity range and the reachable range. The evaluation information referred to herein may be any information as long as it is possible to evaluate whether or not the user can travel without inconvenience in the activity range of the user even if the user switches to the EV. For example, the evaluation information may include information indicating whether or not there is an inconvenience in traveling in the activity range of the user in the EV.

As a specific example, the evaluation information may include information obtained by evaluating whether or not it is possible to switch to the EV (newly introduce the EV). In such an example, the generation unit 136 determines whether or not it is possible to newly introduce the EV on the basis of the inclusion relationship between the activity range and the reachable range and the dispersion status of charging spots, and generates the evaluation information including the result of the determination.

For example, in a case where the activity range is smaller than the reachable range and the activity range is included in the reachable range, the generation unit 136 determines whether or not it is possible to newly introduce the EV on the basis of whether or not a dispersion status of charging spots in the activity range satisfies a predetermined condition.

On the other hand, in a case where the activity range is larger than the reachable range and the reachable range is included in the activity range, the generation unit 136 determines whether or not it is possible to newly introduce the EV on the basis of whether or not the relationship between the dispersion status of charging spots in the activity range and the dispersion status of charging spots in the reachable range satisfies a predetermined condition.

Note that the generation unit 136 may determine the presence or absence of the inclusion on the basis of the area of an overlapping region that is a region overlapping between the activity range and the reachable range.

### (Output control unit 137)

An output control unit 137 controls the evaluation information generated by the generation unit 136 to be output to the terminal device 10. For example, the output control unit 137 causes the terminal device 10 to display the evaluation information generated according to access from the terminal device 10.

### [5. Activity Range Specifying Procedure]

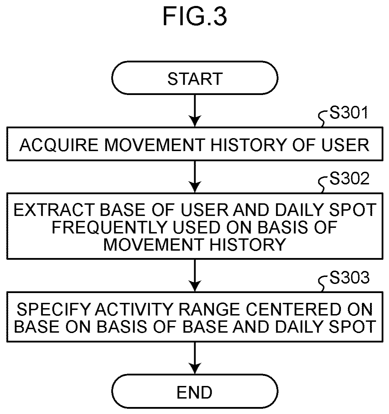

An activity range specifying method will be described with reference to FIG. 3. FIG. 3 is a flowchart illustrating a procedure of the activity range specifying method according to the embodiment. FIG. 3 illustrates a scene in which the activity range of a user U1 is specified.

First, the acquisition unit 131 acquires the movement history of the user U1 (Step S301). The acquisition unit 131 may acquire temporal change of the position information of the user U1 as the movement history. On the other hand, a configuration may be adopted in which the movement history is input by the user U1. In this case, the acquisition unit 131 may acquire the movement history input by the user U1.

Next, the activity range specifying unit 132 extracts the base of the user U1 and a spot (daily spot) frequently used by the user U1 on the basis of the movement history (Step S302). The activity range specifying unit 132 can extract the base and the daily spot on the basis of the dispersion status of the position information included in the movement history. On the other hand, a configuration may be adopted in which the user U1 is caused to input information of the base, information of the daily spot, and information of the movement frequency. In this case, the activity range specifying unit 132 may extract the base of the user U1 and the daily spot of the user U1 on the basis of the information of the base, the information of the daily spot, and the information of the movement frequency input by the user U1.

Then, the activity range specifying unit 132 specifies an activity range centered on the base of the user U1 on the basis of the base of the user U1 and the daily spot of the user U1 (Step S303).

### [6. Specific Example of Activity Range Specifying Method]

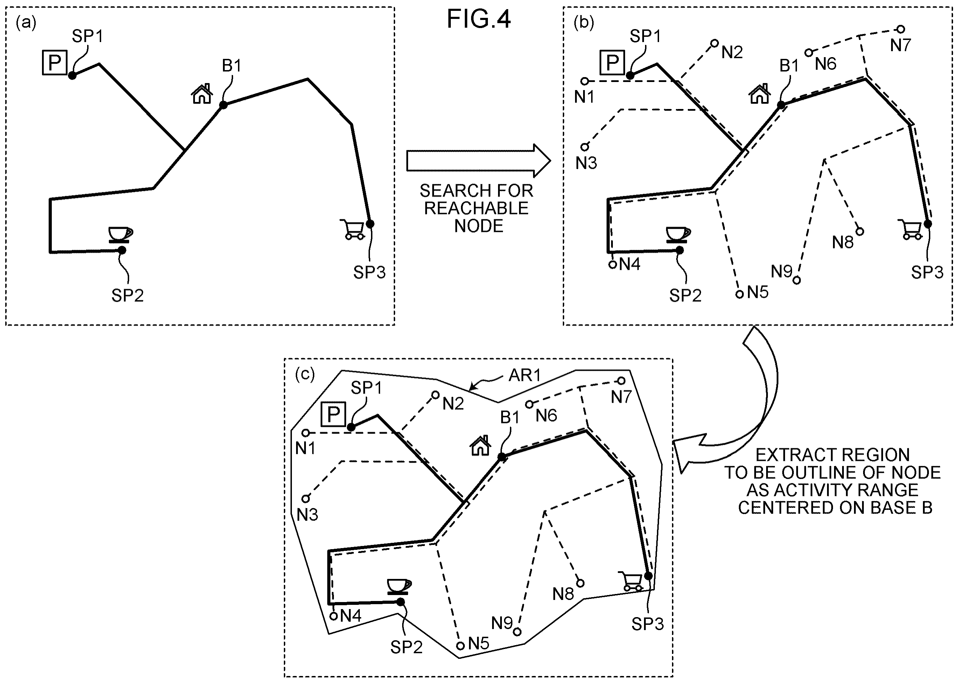

Next, a specific example of the activity range specifying method will be described with reference to FIG. 4. FIG. 4 is a diagram illustrating a specific example of the activity range specifying method according to the embodiment.

FIG. 4(a) illustrates an example in which the activity range specifying unit 132 extracts a "base B1" as the base of the user U1 and extracts a "spot SP1", a "spot SP2", and a "spot SP3" as the daily spots of the user U1.

In such a state, the activity range specifying unit 132 refers to the map data stored in the map information storage unit 121 and searches for a node (reachable node) reachable from the base B1. Specifically, the activity range specifying unit 132 selects a spot having a maximum movement distance D1 with the longest movement distance from the base B1 among the spot SP1, the spot SP2, and the spot SP3. Then, the activity range specifying unit 132 searches for a node reachable from the base B1 within the same distance as the maximum movement distance D1 or within around the distance range with respect to the maximum movement distance D1.

FIG. 4(b) illustrates an example in which the activity range specifying unit 132 extracts nine nodes, that is, nodes N1 to N9, as reachable nodes.

Next, as illustrated in FIG. 4(c), the activity range specifying unit 132 extracts (specifies) a region to be the outline of the nodes N1 to N9 as an activity range AR1 centered on the base B. Although not illustrated in FIG. 4, the activity range specifying unit 132 may also calculate the area of the activity range AR1. Furthermore, the information of the activity range AR1 is stored in the range information storage unit 123.

### [7. Reachable Range Specifying Procedure]

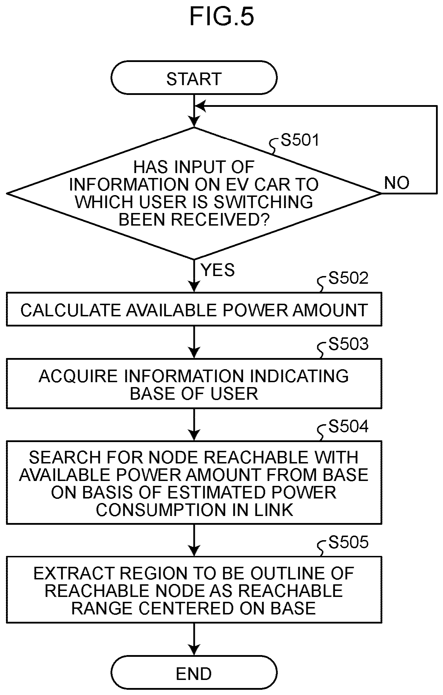

A method of specifying the reachable range will be described with reference to FIG. 5. FIG. 5 is a flowchart illustrating a procedure of a reachable range specifying method according to the embodiment. FIG. 5 illustrates a scene in which the reachable range reachable in the EV (EV selected by the user U1) from the base B1 of the user U1 is specified.

The reception unit 133 determines whether or not an input of EV vehicle information indicating the EV to which the user is switching has been received (Step S501). For example, the reception unit 133 may determine whether or not an input of the virtual power storage amount has been received as the EV vehicle information. For example, the user U1 can input percentage information for calculating the available power amount as the virtual power storage amount.

While the input of the EV vehicle information is not received (Step S501; No), the reception unit 133 waits until it is determined that the input of the EV vehicle information is received.

On the other hand, when the input of the EV vehicle information is received (Step S501; Yes), the calculation unit 134 calculates the available power amount (power storage amount) on the basis of the virtual power storage amount included in the EV vehicle information (Step 502). For example, when the user U1 inputs 50% as the virtual power storage amount, the calculation unit 134 may calculate a charge amount corresponding to 50% of the battery maximum capacity of the EV selected by the user U1 as the available power amount.

Note that the calculation unit 134 may calculate the power amount dynamically available on the basis of the average remaining amount of power stored in the battery. Here, for convenience of explanation, it is assumed that the user U1 already owns an EV and is considering switching to another EV. In such an example, the calculation unit 134 may calculate the available power amount by obtaining the average of the power remaining per month, that is, the average remaining amount on the basis of the use environment (for example, a monthly travel distance, the number of times of monthly power supply, the presence or absence of a charging spot within the activity range AR1, and the like) of the user U1 and subtracting the average remaining amount from the battery maximum capacity. As described above, in a case where a configuration is adopted in which the power amount dynamically available is calculated, the reception unit 133 does not necessarily receive the input of the virtual power storage amount.

Next, the reachable range specifying unit 135 acquires information indicating the base of the user U1 (Step S503). According to the above example, the reachable range specifying unit 135 acquires the information on the base B1 as the information indicating the base of the user U1.

Then, the reachable range specifying unit 135 searches for a node reachable with the available power amount from the base on the basis of the estimated power consumption (energy consumption) in the link (Step S504). For example, the reachable range specifying unit 135 searches for a node reachable in the EV so that the cumulative total of the estimated power consumption in the link is minimized.

The estimated power consumption in the link may be calculated by the calculation unit 134. Here, the reachable range corresponding to the power storage amount of the battery can be obtained by, for example, the technology disclosed in WO 2013/125019 A (prior application). Therefore, the calculation unit 134 can calculate the estimated power consumption in the link associated with the base B1 using the predetermined consumed energy calculation formula. For example, the calculation unit 134 calculates the required time required for the EV to finish traveling on the link on the basis of traffic congestion prediction data, the length of the link, a road type, and the like. Then, the calculation unit 134 calculates the estimated power consumption in the link using any one or more energy consumption estimation formulas of the formulas (1) to (6) described in the prior application, for example.

Furthermore, the calculation unit 134 may correct the energy consumption estimation formulas by adding an influence of wind or a passenger to the energy consumption estimation formulas. For example, the calculation unit 134 calculates the degree of influence of wind on the estimated power consumption of each link on the basis of the estimated power consumption (which can be said to be the estimated power consumption in the case of assuming no wind state) calculated using the energy consumption estimation formulas described above and information on wind in the region corresponding to the link. Then, the calculation unit 134 corrects the estimated power consumption using the degree of influence of wind as a weighting value.

For example, the reachable range specifying unit 135 searches for a link closest to the base B1, searches for a node connected to this link, and adds the node as a node candidate for searching for a reachable point. The estimated power consumption in the link closest to the base B1 is calculated by the calculation unit 134 and stored in, for example, the range information storage unit 123.

Furthermore, the reachable range specifying unit 135 searches for all links connected to the node candidate, searches for a node connected to this link, and further adds the node as a node candidate for searching for a reachable point. Similarly, the estimated power consumption in all the currently searched links is calculated by the calculation unit 134 and stored in the range information storage unit 123.

In this way, the search for the link and the node candidate and the calculation of the estimated power consumption in the link are repeated. Then, the reachable range specifying unit 135 compares the estimated power consumption among the cumulative estimated power consumption in each of a plurality of paths obtained by the search with the available power amount, and determines a node corresponding to the minimum estimated power consumption as a reachable node (reachable point).

Then, the reachable range specifying unit 135 extracts (specifies) a region to be the outline of the reachable node as a reachable range AR2 centered on the base B1 (Step S505). Although not illustrated in FIG. 5, the activity range specifying unit 132 may also calculate the area of the reachable range AR2. Furthermore, the information on the reachable range AR2 is stored in the range information storage unit 123.

### [8. Estimated Power Consumption Calculation Procedure]

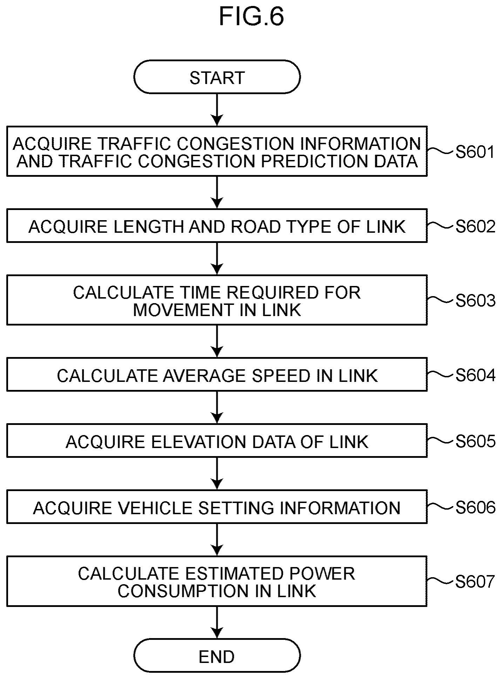

A method of calculating the estimated power consumption will be described with reference to FIG. 6. FIG. 6 is a flowchart illustrating a procedure of the estimated power consumption calculation method according to the embodiment. The procedure of the estimated power consumption calculation method illustrated in FIG. 6 illustrates a specific example of the method of calculating the estimated power consumption used in Step S504 of FIG. 5.

First, the acquisition unit 131 acquires traffic congestion information and traffic congestion prediction data (Step S601). For example, the acquisition unit 131 can acquire the traffic congestion information and the traffic congestion prediction data from a predetermined external device.

Furthermore, the acquisition unit 131 acquires the length of the link and the road type of the link (Step S602). The length of the link and the road type of the link may be associated with the map data in advance in the map information storage unit 121.

Next, the calculation unit 134 calculates time required for the movement in the link on the basis of the information acquired in Steps S601 and S602 (Step S603). Specifically, the calculation unit 134 calculates the required time required for the EV to finish traveling on the link.

Furthermore, the calculation unit 134 calculates the average speed in the link on the basis of the information acquired in Steps S601 to S603 (Step S604). Specifically, the calculation unit 134 calculates an average speed when the EV travels on the link.

Next, the acquisition unit 131 acquires elevation data of the link (Step S605). The elevation data of the link may be associated with the map data in advance in the map information storage unit 121. Furthermore, the acquisition unit 131 acquires EV setting information (Step S606) .

Next, the calculation unit 134 calculates the estimated power consumption in the link using any one or more energy consumption estimation formulas of the formulas (1) to (6) on the basis of the information acquired in Steps S601 to S606 (Step S607).

### [9. Evaluation Information Generation Procedure]

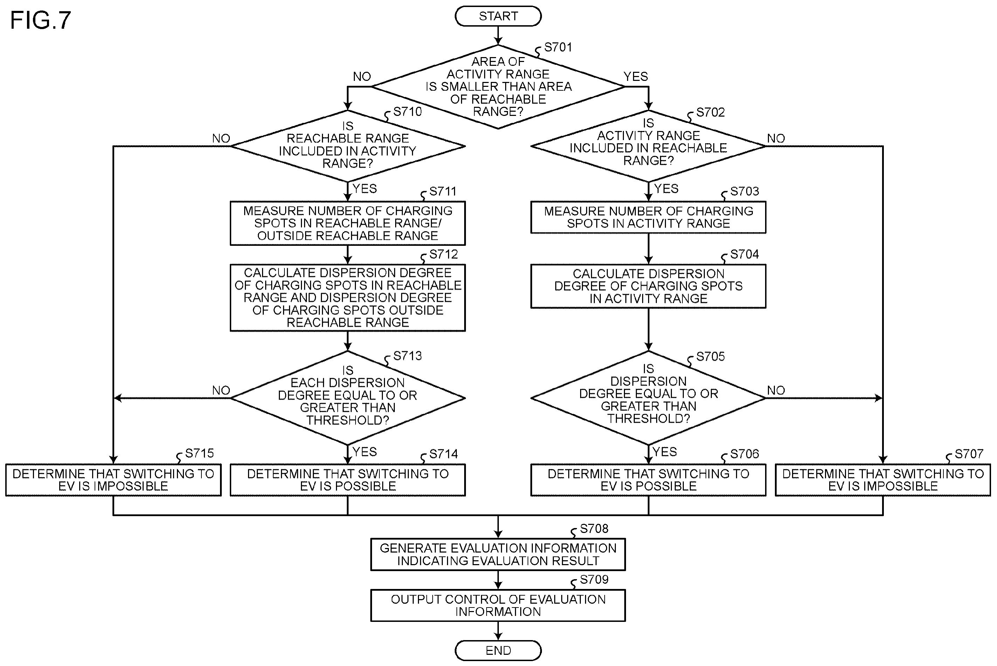

An evaluation information generation method will be described with reference to FIG. 7. FIG. 7 is a flowchart illustrating a procedure of the evaluation information generation method according to the embodiment. FIG. 7 illustrates a scene in which evaluation information for the user U1 is generated.

First, the generation unit 136 determines whether or not the area of the activity range AR1 is smaller than the area of the reachable range AR2 (Step S701).

If the generation unit 136 determines that the area of the activity range AR1 is smaller than the area of the reachable range AR2 (Step S701; Yes), the generation unit 136 determines whether or not the activity range AR1 is included in the reachable range AR2 (Step S702). For example, by comparing the area of the overlapping region, which is a region overlapping between the activity range AR1 and the reachable range AR2, with the area of the activity range AR1, the generation unit 136 may determine that the activity range AR1 is included in the reachable range AR2 in a case where a predetermined percentage (for example, 80%) or more of the activity range AR1 is included in the reachable range AR2.

If the generation unit 136 determines that the activity range AR1 is included in the reachable range AR2 (Step S702; Yes), the number N_AR1 of charging spots CS in the activity range AR1 is measured (Step S703). The generation unit 136 can measure the number N_AR1 of the charging spots CS in the activity range AR1 on the basis of the map data stored in the map information storage unit 121.

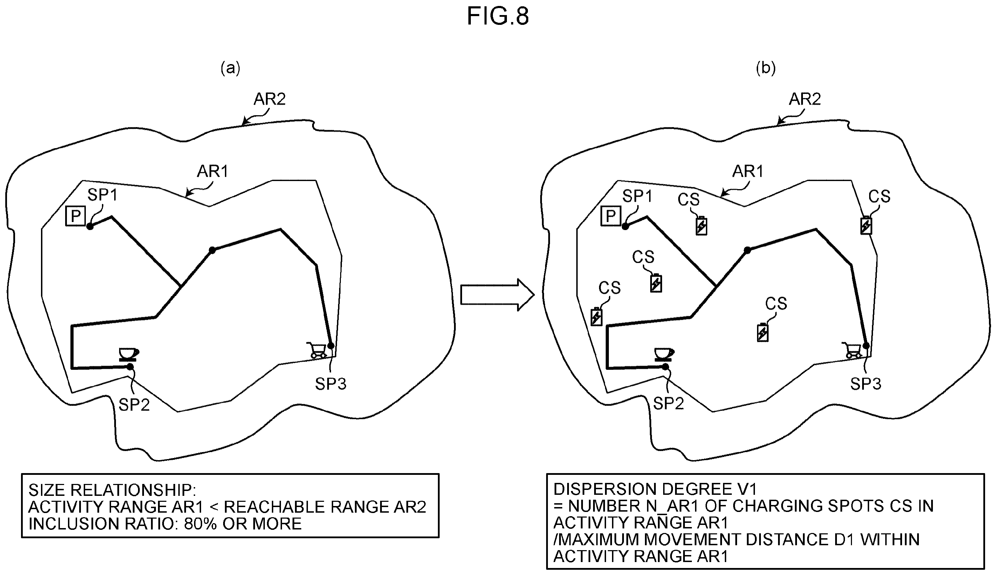

Next, the generation unit 136 calculates a dispersion degree V1 of the charging spots CS in the activity range AR1 on the basis of the number N_AR1 of the charging spots CS (Step S704). A method of calculating the dispersion degree V1 will be described in detail with reference to FIG. 8.

Then, the generation unit 136 determines whether the dispersion degree V1 is equal to or greater than a predetermined threshold (Step S705).

If the dispersion degree V1 is equal to or greater than the predetermined threshold (Step S705; Yes), the generation unit 136 determines that the user U1 can switch to the EV (newly introduce the EV) (Step S706). In other words, the generation unit 136 evaluates that there is no inconvenience in daily movement even if the user U1 switches to the EV car.

On the other hand, if the dispersion degree V1 is less than the predetermined threshold (Step S705; No), the generation unit 136 determines that the user U1 cannot switch to the EV (newly introduce the EV) (Step S707). Furthermore, even if the generation unit 136 determines that the activity range AR1 is not included in the reachable range AR2 (Step S702; No), the generation unit 136 determines that the user U1 cannot switch to the EV (newly introduce the EV). In other words, the generation unit 136 evaluates that there may be inconvenience occurred in daily movement if the user U1 switches to the EV.

Then, the generation unit 136 generates evaluation information indicating the evaluation result obtained in Step S706 or Step S707 (Step S708).

Furthermore, the output control unit 137 performs control such that the evaluation information generated in Step S708 is displayed on the terminal device 10 (Step S709).

The description returns to Step S701. If the generation unit 136 determines that the area of the activity range AR1 is larger than the area of the reachable range AR2 (Step S701; No), the generation unit 136 determines whether or not the reachable range AR2 is included in the activity range AR1 (Step S710). For example, by comparing the area of the overlapping region, which is a region overlapping between the activity range AR1 and the reachable range AR2, with the area of the reachable range AR2, the generation unit 136 may determine that the reachable range AR2 is included in the activity range AR1 in a case where a predetermined percentage (for example, 80%) or more of the reachable range AR2 is included in the activity range AR1.

If the generation unit 136 determines that the reachable range AR2 is included in the activity range AR1 (Step S710; Yes), the generation unit 136 measures the number N_AR2 of the charging spots CS in the reachable range AR2, and also measures the number N_ARn of the charging spots CS outside the reachable range AR2 (Step S711). The outside of the reachable range AR2 may be a region that does not include the reachable range AR2 in the activity range AR1. The generation unit 136 can measure the number N_AR2 of the charging spots CS and the number N_ARn of the charging spots on the basis of the map data stored in the map information storage unit 121.

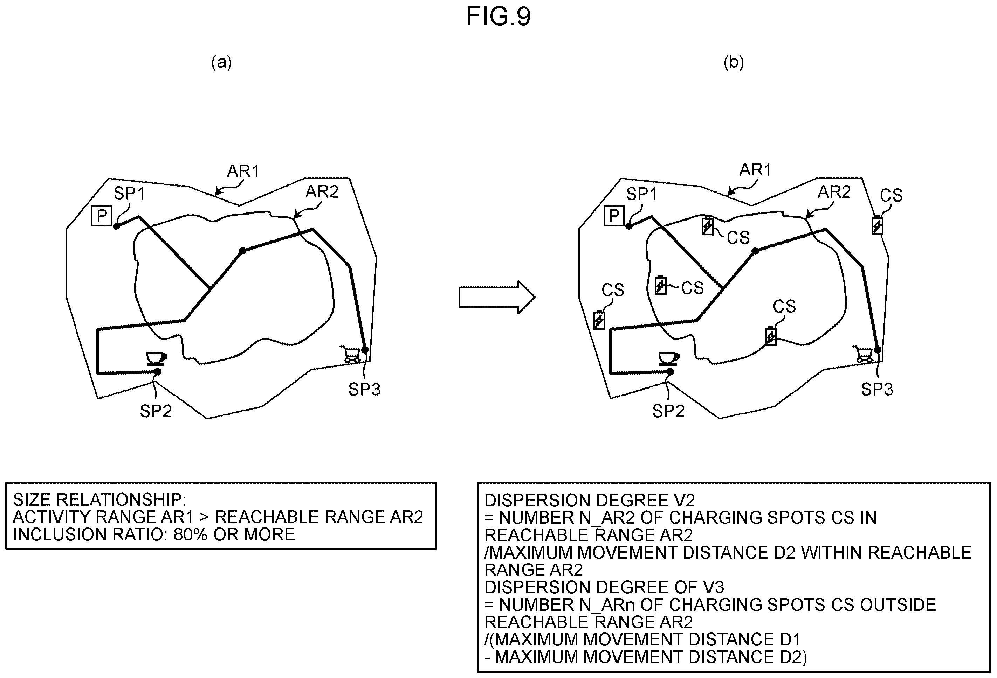

Next, the generation unit 136 calculates a dispersion degree V2 of the charging spots CS in the reachable range AR2 on the basis of the number N_AR2 of the charging spots CS, and calculates a dispersion degree V3 of the charging spots CS outside the reachable range AR2 on the basis of the number N_ARn of the charging spots CS (Step S712). A method of calculating the dispersion degrees V2 and V3 will be described in detail with reference to FIG. 9.

Then, the generation unit 136 determines whether the dispersion degrees V2 and V3 are equal to or greater than a predetermined threshold (Step S713).

If the dispersion degrees V2 and V3 are equal to or greater than the predetermined threshold (Step S713; Yes), the generation unit 136 determines that the user U1 can switch to the EV (newly introduce the EV) (Step S714). That is, the generation unit 136 evaluates that there is no inconvenience in daily movement even if the user U1 switches to the EV.

On the other hand, if the dispersion degrees V2 and V3 are less than the predetermined threshold (Step S713; No), the generation unit 136 determines that the user U1 cannot switch to the EV (newly introduce the EV) (Step S715). Furthermore, if the generation unit 136 determines that the reachable range AR2 is not included in the activity range AR1 (Step S710; No), the generation unit 136 also determines that the user U1 cannot switch to the EV (newly introduce the EV). That is, the generation unit 136 evaluates that there may be inconvenience occurred in daily movement if the user U1 switches to the EV.

Then, the generation unit 136 generates evaluation information indicating the evaluation result obtained in Step S714 or Step S715 (Step S708).

Furthermore, the output control unit 137 performs control such that the evaluation information generated in Step S708 is displayed on the terminal device 10 (Step S709) .

### [10. Specific Example of Dispersion Degree Calculation Method]

Hereinafter, a specific example of a dispersion degree calculation method will be described with reference to FIGS. 8 and 9. In FIG. 8, a method of calculating the dispersion degree V1 illustrated in Step S704 of FIG. 7 will be described. In FIG. 9, a method of calculating the dispersion degrees V2 and V3 illustrated in Step S712 of FIG. 7 will be described.

### [10-1. Specific Example of Dispersion Degree Calculation Method (1)]

FIG. 8 is a diagram illustrating a specific example (1) of the dispersion degree calculation method according to the embodiment. FIG. 8(a) illustrates an example in which it is determined that the activity range AR1 is included in the reachable range AR2 by calculating the inclusion rate of 80% or more of the activity range AR1 with respect to the reachable range AR2 according to the size relationship in which the area of the activity range AR1 is smaller than the area of the reachable range AR2.

In such a state, as illustrated in FIG. 8(b), the generation unit 136 calculates the number of the charging spots CS per movement distance within the activity range AR1 as the dispersion degree V1 of the charging spots CS in the activity range AR1. Specifically, the generation unit 136 acquires the maximum movement distance D1 within the activity range AR1. More specifically, the generation unit 136 acquires the maximum movement distance D1 having the longest movement distance from the base B1 among the spot SP1, the spot SP2, and the spot SP3. Furthermore, the generation unit 136 counts the number N_AR1 of the charging spots CS. According to the example of FIG. 8(b), the generation unit 136 obtains "5" as the counting result of the number N_AR1 of the charging spots CS.

Then, the generation unit 136 calculates the ratio of the number N_AR1 of the charging spots CS to the maximum movement distance D1 as the dispersion degree V1 of the charging spots CS in the activity range AR1, and advances the process to Step S705.

### [10-2. Specific Example of Dispersion Degree Calculation Method (2)]

FIG. 9 is a diagram illustrating a specific example (2) of the dispersion degree calculation method according to the embodiment. FIG. 9(a) illustrates an example in which it is determined that the reachable range AR2 is included in the activity range AR1 by calculating the inclusion rate of 80% or more of the reachable range AR2 with respect to the activity range AR1 according to the size relationship in which the area of the activity range AR1 is larger than the area of the reachable range AR2.

In such a state, as illustrated in FIG. 9(b), the generation unit 136 calculates the number of the charging spots CS per movement distance within the reachable range AR2 as the dispersion degree V2 of the charging spots CS in the reachable range AR2. Specifically, the generation unit 136 acquires a maximum movement distance D2 within the reachable range AR2. More specifically, the generation unit 136 acquires the maximum movement distance D2 having the longest movement distance from the base B1 among the reachable nodes searched by the reachable range specifying method described in FIG. 5. Furthermore, the generation unit 136 counts the number N_AR2 of the charging spots CS. According to the example of FIG. 9(b), the generation unit 136 obtains "3" as the counting result of the number N_AR2 of the charging spots CS.

Then, the generation unit 136 calculates the ratio of the number N_AR2 of the charging spots CS to the maximum movement distance D2 as the dispersion degree V2 of the charging spots CS in the reachable range AR2.

Furthermore, as illustrated in FIG. 9(b), the generation unit 136 calculates the number of the charging spots CS per movement distance outside the reachable range AR2 as the dispersion degree V3 of the charging spots CS outside the reachable range AR2. In such an example, the generation unit 136 acquires the maximum movement distance D1 within the activity range AR1 in addition to the maximum movement distance D2 within the reachable range AR2. Furthermore, the generation unit 136 counts the number N_ARn of the charging spots CS. According to the example of FIG. 9(b), the generation unit 136 obtains "2" as the counting result of the number N_ARn of the charging spots CS.

Then, the generation unit 136 calculates the ratio of the number N_ARn of the charging spots CS to the difference (D1 - D2) between the maximum movement distance D1 and the maximum movement distance D2 as the dispersion degree V3 of the charging spots CS outside the reachable range AR2.

After calculating the dispersion degrees V2 and V3, the generation unit 136 advances the process to Step S713.

### [11. Modification]

Hereinafter, modifications of the information processing according to the embodiment of the present disclosure will be described. For example, the server device 100 may be implemented in various forms other than the above embodiments.

### [11-1. Evaluation Information (1)]

In the above embodiment, an example has been described in which the generation unit 136 determines whether or not it is possible to newly introduce the EV on the basis of the inclusion relationship between the activity range and the reachable range and the dispersion status of the charging spots, and generates the evaluation information including the result of the determination. However, the generation unit 136 may evaluate convenience when the EV moves in the activity range on the basis of on the inclusion relationship between the activity range and the reachable range. For example, in a case where a predetermined percentage or more of the activity range is included in the reachable range, the generation unit 136 may evaluate that there is no inconvenience in daily movement even if the user switches to the EV.

For example, as illustrated in FIG. 8(a), in a case where 80% or more of the activity range AR1 is included in the reachable range AR2, the generation unit 136 evaluates that there is no inconvenience for the user U1 in daily movement even if the user U1 switches to the EV. Furthermore, the generation unit 136 may generate, as the evaluation information, information in which the inclusion relationship between the activity range AR1 and the reachable range AR2 is displayed on the map together with the evaluation result.

### [11-2. Evaluation Information (2)]

Furthermore, describing by using the example of the user U1, the generation unit 136 may estimate which spot among the daily spots SP1 to SP3 frequently used by the user U1 can be reached from the base B1 without charging on the basis of the inclusion relationship between the activity range AR1 and the reachable range AR2 and the dispersion status of the charging spots in these ranges. Then, the generation unit 136 may generate the evaluation information including the estimation result.

### [11-3. Reachable Range Specifying Method (1)]

In the above embodiment, an example has been described in which the calculation unit 134 calculates the required time required for the EV to finish traveling on the link on the basis of the traffic congestion prediction data, the length of the link, the road type, and the like, and calculates the energy consumption in the link by applying the calculation result to the predetermined consumed energy calculation formula.

However, the calculation unit 134 may calculate a weighting factor on the basis of a comparison between the fuel consumption corresponding to the driving situation of the vehicle VE by the user and the fuel consumption statistically obtained for another vehicle VEx of the same type as the vehicle VE, and correct the energy consumption estimated using the predetermined consumed energy calculation formula with the weighting factor.

Describing using an example of the user U1, for example, the calculation unit 134 compares an actual fuel consumption FC1 for the past one year statistically obtained by the user U1 driving the vehicle VE with an actual fuel consumption FCx statistically obtained for the other vehicle VEx. For example, in a case where the actual fuel consumption FC1 is 1.2 times the actual fuel consumption FCx, the calculation unit 134 calculates "1.2" as the weighting factor, and corrects the estimated power consumption calculated using the consumed energy calculation formula using the weighting factor "1.2". Note that the weighting processing described as being performed by the calculation unit 134 may be performed by the reachable range specifying unit 135.

### [11-4. Reachable Range Specifying Method (2)]

Furthermore, the calculation unit 134 may correct the energy consumption estimated using the predetermined consumed energy calculation formula with the weighting factor by using the weighting factor calculated on the basis of at least one of the actual fuel consumption statistically obtained for a predetermined region including the activity range and the actual fuel consumption statistically obtained for the current season.

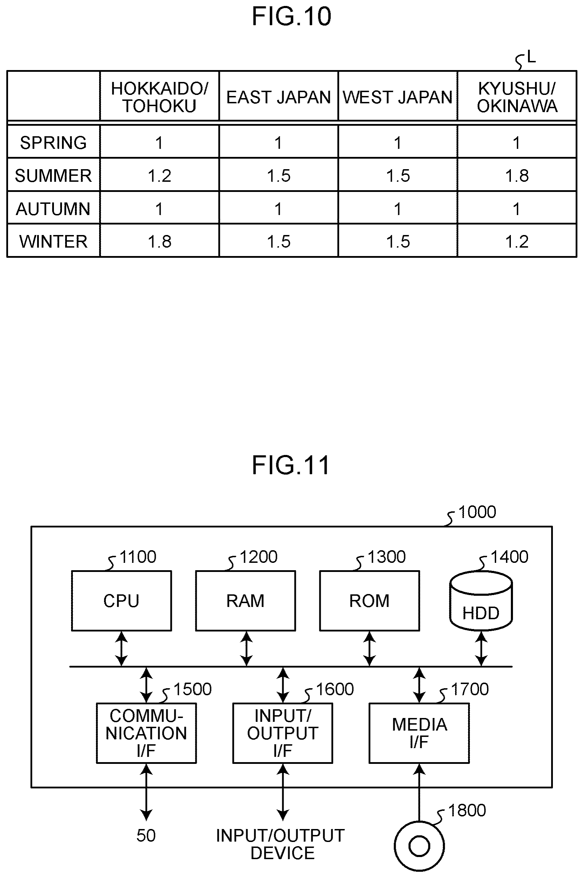

This point will be described with reference to FIG. 10. FIG. 10 is a diagram illustrating a modification of the reachable range specifying method according to the embodiment. FIG. 10 illustrates a list L of weighting factors calculated for each combination by comparing the statistical value of the actual fuel consumption obtained for each combination of the region and the season with the reference value (for example, the overall average).

According to the list L, when attention is paid to "Hokkaido/Tohoku", the weight value "1" is calculated for the season "spring", the weight value "1.2" is calculated for the season "summer", the weight value "1" is calculated for the season "autumn", and the weight value "1.8" is calculated for the season "winter". Such an example illustrates an example in which, in "Hokkaido/Tohoku", the weight value "1" is calculated on the basis of the result that the statistical value of the actual fuel consumption does not change as compared with the overall average in the "spring" and "autumn" seasons. On the other hand, in "Hokkaido/Tohoku", an example is illustrated in which the weight value "1.2" is calculated on the basis of the result that the statistical value of the actual fuel consumption is 1.2 times as large as the overall average in the "summer" season. Furthermore, in the "Hokkaido/Tohoku", an example is illustrated in which the weight value "1.8" is calculated on the basis of the result that the statistical value of the actual fuel consumption is 1.8 times as large as the overall average in the "winter" season.

Furthermore, according to the list L, when attention is paid to "East Japan", the weight value "1" is calculated for the season "spring", the weight value "1.5" is calculated for the season "summer", the weight value "1" is calculated for the season "autumn", and the weight value "1.5" is calculated for the season "winter". Such an example illustrates an example in which, in "East Japan", the weight value "1" is calculated on the basis of the result that the statistical value of the actual fuel consumption does not change as compared with the overall average in the "spring" and "autumn" seasons. On the other hand, in "East Japan", an example is illustrated in which the weight value "1.5" is calculated on the basis of the result that the statistical value of the actual fuel consumption is 1.5 times as large as the overall average in the "summer" and "winter" seasons.

Similarly to the above examples, "West Japan" and "Kyushu/Okinawa" are also as illustrated in the drawings, and thus the description thereof is omitted.

Here, for example, it is assumed that the base B1 of the user U1 exists in "East Japan", and the time to calculate the estimated power consumption is "winter". In such an example, the calculation unit 134 mainly acquires "1.5" as the weighting factor by comparing the combination of "East Japan" and "winter" with the list L. Then, the calculation unit 134 corrects the estimated power consumption calculated using the consumed energy calculation formula using the weighting factor "1.5". Note that the weighting processing described as being performed by the calculation unit 134 may be performed by the reachable range specifying unit 135.

### [11-5. Limit Charging Spot to be Calculated]

In the above embodiment, the example has been described in which the generation unit 136 counts the number N_AR1 of the charging spots CS in the activity range AR1, the number N_AR2 of the charging spots CS in the reachable range AR2, and the number N_ARn of the charging spots CS outside the reachable range AR2. However, the generation unit 136 may limit a charging spot to a specific type and count the number thereof.

For example, in the charging spot CS, there are various types such as charging efficiency of "fast" or "normal", a charge form of "pay" or "free", only "available" to a subscriber, and "available" without a subscription. Therefore, the generation unit 136 may count the number of the charging spots CS of the type designated by the user U1. For example, in a case where the user U1 designates the charging efficiency "fast" and the charge form "free", the generation unit 136 counts only the charging spots CS satisfying the combination of the types of charging efficiency "fast"/charge form "free".

### [11-6. Device Configuration]

In the above embodiment, the processing described as being performed by the server device 100 may be performed by the terminal device 10. Specifically, the series of processing described as the information processing according to the embodiment of the present disclosure may be performed by the terminal device 10.

### [11-7. Release of Limitation]

In the above embodiment, the evaluation of switching from the GV to the EV has been described as an application scene of the present disclosure. However, the present disclosure is also applicable to evaluation of switching to a hybrid electric vehicle (HEV), a plug-in hybrid electric vehicle (PHEV), a fuel cell electric vehicle (FCEV), or the like.

### [12. Hardware Configuration]

The server device 100 (an example of the information processing apparatus) described above may be implemented by, for example, a computer 1000 having a configuration as illustrated in FIG. 11. FIG. 11 is a hardware configuration diagram illustrating an example of a computer implementing functions of the server device 100. The computer 1000 includes a CPU 1100, a RAM 1200, a ROM 1300, an HDD 1400, a communication interface (I/F) 1500, an input/output interface (I/F) 1600, and a media interface (I/F) 1700.

The CPU 1100 operates on the basis of a program stored in the ROM 1300 or the HDD 1400, and controls each unit. The ROM 1300 stores a boot program executed by the CPU 1100 when the computer 1000 is activated, a program depending on the hardware of the computer 1000, and the like.

The HDD 1400 stores a program executed by the CPU 1100, data used by the program, and the like. The communication interface 1500 receives data from another device via a predetermined communication network, sends the data to the CPU 1100, and transmits data generated by the CPU 1100 to another device via a predetermined communication network.

The CPU 1100 controls an output device such as a display and an input device such as a keyboard via the input/output interface 1600. The CPU 1100 acquires data from the input device via the input/output interface 1600. Furthermore, the CPU 1100 outputs the generated data to the output device via the input/output interface 1600.

The media interface 1700 reads a program or data stored in a recording medium 1800 and provides the program or data to the CPU 1100 via the RAM 1200. The CPU 1100 loads the program from the recording medium 1800 onto the RAM 1200 via the media interface 1700, and executes the loaded program. The recording medium 1800 is, for example, an optical recording medium such as a digital versatile disc (DVD) or a phase change rewritable disk (PD), a magneto-optical recording medium such as a magneto-optical disk (MO), a tape medium, a magnetic recording medium, a semiconductor memory, or the like.

For example, in a case where the computer 1000 functions as the server device 100 according to the embodiment, the CPU1100 of the computer 1000 realizes the function of the control unit 130 by executing a program loaded on the RAM 1200. The CPU 1100 of the computer 1000 reads and executes these programs from the recording medium 1800, but as another example, these programs may be acquired from another device via a predetermined communication network.

### [13. Others]

Among the processes described in the above embodiments, all or a part of the processes described as being performed automatically can be performed manually, or all or a part of the processes described as being performed manually can be performed automatically by a known method. In addition, the processing procedure, specific name, and information including various data and parameters illustrated in the document and the drawings can be optionally changed unless otherwise specified. For example, the various types of information illustrated in each figure are not limited to the illustrated information.

Furthermore, each component of each device illustrated in the drawings is functionally conceptual, and is not necessarily physically configured as illustrated in the drawings. That is, a specific form of distribution and integration of each device is not limited to the illustrated form, and all or a part thereof can be functionally or physically distributed and integrated in an optional unit according to various loads, usage conditions, and the like. For example, a part or all of the processing described as being performed by the server device 100 may be configured to be performed on an in-vehicle device 200 side.

Furthermore, the above-described embodiments can be appropriately combined within a range in which the processing contents do not contradict each other.

Although some of the embodiments of the present application have been described in detail with reference to the drawings, these are merely examples, and the present invention can be implemented in other forms subjected to various modifications and improvements on the basis of the knowledge of those skilled in the art, including the aspects described in the section of the present invention.

### Reference Signs List

- 1: SYSTEM
- 10: TERMINAL DEVICE
- 100: SERVER DEVICE
- 120: STORAGE UNIT
- 121: MAP INFORMATION STORAGE UNIT
- 122: HISTORY INFORMATION STORAGE UNIT
- 123: RANGE INFORMATION STORAGE UNIT
- 124: EVALUATION INFORMATION STORAGE UNIT
- 130: CONTROL UNIT
- 131: ACQUISITION UNIT
- 132: ACTIVITY RANGE SPECIFYING UNIT
- 133: RECEPTION UNIT
- 134: CALCULATION UNIT
- 135: REACHABLE RANGE SPECIFYING UNIT
- 136: GENERATION UNIT
- 137: OUTPUT CONTROL UNIT

## Claims

1. An information processing apparatus comprising:
a first specifying unit that specifies an activity range of a user on a basis of a movement history of the user;
a second specifying unit that specifies a reachable range on a basis of energy consumption in a mobile body selected by the user, the reachable range being a range reachable in the mobile body from a base of the user within the activity range; and
a generation unit that generates evaluation information capable of evaluating movement in the activity range in the mobile body on a basis of the activity range and the reachable range.

2. The information processing apparatus according to claim 1, wherein
the second specifying unit specifies the reachable range on a basis of energy consumption estimated to be consumed when the mobile body moves in a predetermined road section having the base as a starting point and a power storage amount of a battery that drives a power source of the mobile body, and
the generation unit generates the evaluation information capable of evaluating convenience of movement according to a charging status required when the mobile body moves in the activity range.

3. The information processing apparatus according to claim 2, wherein
the generation unit evaluates convenience when the mobile body moves in the activity range on a basis of an inclusion relationship between the activity range and the reachable range, and generates the evaluation information including an evaluation result of the convenience and information in which the inclusion relationship is indicated on a map.

4. The information processing apparatus according to claim 2, wherein
the generation unit determines whether or not it is possible to newly introduce the mobile body on a basis of an inclusion relationship between the activity range and the reachable range and a dispersion status of charging spots, and generates the evaluation information including a result of the determination.

5. The information processing apparatus according to claim 4, wherein
in a case where the activity range is smaller than the reachable range and the activity range is included in the reachable range, the generation unit determines whether or not it is possible to newly introduce the mobile body on a basis of whether or not a dispersion status of charging spots in the activity range satisfies a predetermined condition.

6. The information processing apparatus according to claim 4, wherein
in a case where the activity range is larger than the reachable range and the reachable range is included in the activity range, the generation unit determines whether or not it is possible to newly introduce the mobile body on a basis of a relationship between a dispersion status of charging spots in the activity range and a dispersion status of charging spots in the reachable range satisfies a predetermined condition.

7. The information processing apparatus according to claim 5 or 6, wherein
the generation unit determines presence or absence of the inclusion on a basis of an area of an overlapping region that is a region overlapping between the activity range and the reachable range.

8. The information processing apparatus according to claim 4, wherein
the generation unit estimates how many spots among spots that exist within the activity range and are frequently used by the user can be reached from the base without charging on a basis of an inclusion relationship between the activity range and the reachable range and a dispersion status of charging spots, and generates the evaluation information including a result of the estimation.

9. The information processing apparatus according to claim 1, wherein
the first specifying unit extracts a spot frequently used by the user from among spots existing in the activity range on a basis of the movement history, and specifies the activity range on a basis of any one of a distance, time, and energy consumption required when the mobile body moves from the base to the spot.

10. The information processing apparatus according to claim 2, wherein
the power storage amount of the battery is a virtual power storage amount input by the user, and
the second specifying unit specifies the reachable range according to the virtual power storage amount.

11. The information processing apparatus according to claim 2, wherein
the second specifying unit weights the energy consumption using a weighting factor calculated on a basis of a comparison between fuel consumption corresponding to a driving status of the mobile body by the user and fuel consumption statistically obtained for the same type as the mobile body.

12. The information processing apparatus according to claim 2, wherein
the second specifying unit weights the energy consumption using a weighting factor calculated on a basis of at least one of fuel consumption statistically obtained for a predetermined region including the activity range and fuel consumption statistically obtained for a current season.

13. An information processing method executed by an information processing apparatus, the method comprising:
a first specifying step of specifying an activity range of a user on a basis of a movement history of the user;
a second specifying step of specifying a reachable range on a basis of energy consumption in a mobile body selected by the user, the reachable range being a range reachable in the mobile body from a base of the user within the activity range; and
a generation step of generating evaluation information capable of evaluating movement in the activity range in the mobile body on a basis of the activity range and the reachable range.

14. An information processing program executed by an information processing apparatus, the program causing the information processing apparatus to execute:
a first specifying procedure of specifying an activity range of a user on a basis of a movement history of the user;
a second specifying procedure of specifying a reachable range on a basis of energy consumption in a mobile body selected by the user, the reachable range being a range reachable in the mobile body from a base of the user within the activity range; and
a generation procedure of generating evaluation information capable of evaluating movement in the activity range in the mobile body on a basis of the activity range and the reachable range.
